# EUROPEAN PATENT SPECIFICATION

(11) **EP 1 903 592 B1**
(45) Date of publication and mention of the grant of the patent: **30.09.2009**
(21) Application number: 07016016.3
(22) Date of filing: 14.08.2007
(51) Int. Cl.: H01H 33/66

(54) **Vacuum insulated switchgear**
Vakuumisoliertes Schaltgetriebe
Appareillage de commutation isolé sous vide

(30) Priority: 20.09.2006 JP 2006253895
(43) Date of publication of application: 26.03.2008
(73) Proprietor: Hitachi, Ltd., Chiyoda-ku Tokyo 100-8280 (JP)
(72) Inventor: Kikukawa, Shuichi, Chiyoda-ku Tokyo 100-8220 (JP); Tsuchiya, Kenji, Chiyoda-ku Tokyo 100-8220 (JP); Kajiyama, Yuko, Chiyoda-ku Tokyo 100-8220 (JP)
(74) Representative: Strehl Schübel-Hopf & Partner

## Description

### FIELD OF THE INVENTION

The present invention relates to a vacuum insulated switchgear and in particular to a vacuum insulated switchgear suitably used in receiving and transforming equipment.

### BACKGROUND OF THE INVENTION

In power receiving and transforming equipment, there is installed a closed switchboard (referred to as a switchgear). It is constructed by housing the following items in an enclosure; a vacuum circuit breaker for interrupting a load current or a fault current; a disconnector and an earthing switch for ensuring the safety of a worker who conducts maintenance work on a load; detectors for system voltage and current; a protective relay; and the like.

With respect to, this type of switchgear, it is required to give consideration to the position and direction of power cables connecting the switchgear. Therefore, it has been desired that the switchgear can cope with the position and direction of the power cables.

In one of measures for the improvement of this regard, various positions and directions of power cables cope with each other as follows. Multiple switches are housed in respective vacuum cases and integrally molded; this molded portion is provided with terminals for power cable connection; and these terminals for power cable connection are protruded in various directions. (Refer to Patent Document 1, for example.)
[Patent Document 1] JP-A-2000-306474 (FIG. 16)

The above-mentioned switchgear is so constructed that the following can be implemented with respect to multiple switches, buses, terminals for power cable connection, and the like housed in an enclosure having a door: the disposition of them in the enclosure can be changed to cope with various positions and directions of power cables.

With respect to power receiving and transforming equipment having this type of switchgear, users' demands have been diversified. An example will be taken. The type of load and operating conditions differ depending on the purpose of use on the customers' sites. When a distribution system is planned, therefore, consideration is given to the requirements for safety, reliability, the maintenance of operation, and expected increase in load. In this planning for power distribution, it is also required to take the following into account: control of a circuit breaker, a disconnector, an earthing switch, and the like constructing the power receiving and transforming equipment and monitoring and measurement of their voltage, current, power, and the like.

In this case, important considerations are how the installation space for the above devices and monitoring and measuring instruments should be reduced for size and weight reduction and suppression of investment in installation.

Further, it is important to give sufficient consideration to safety as well as a wide variety of users' other demands. For example, some of important considerations are to enhance the safety of installed switchgear against earthquakes and the like and to fulfill a failsafe function in a failure in an operating system for a circuit breaker.

### SUMMARY OF THE INVENTION

The invention has been made based on the foregoing. An object of the invention is to provide vacuum insulated switchgear that makes it possible to enhance the safety and reliability of the switchgear against earthquakes and the like during transportation and setting and after installation, and to fulfill a failsafe function in a failure, such as breakage in an operating mechanical section of the switchgear.

To attain the above object, the present invention provides a vacuum insulated switchgear according to claim 1.

In a vacuum insulated switchgear according to the invention, a switch and an operating mechanical section interlocking therewith are disposed in a switch block positioned at a lower level than the intermediate portion of an enclosure in the direction of height. The switch is the heaviest one among the devices housed in the enclosure. Therefore, the center of gravity of the entire switchgear can be set to a low position. As a result, the stability of the switchgear during transportation and setting is enhanced, and thus workability can be enhanced. Further, the installed switchgear is excellent in stability against earthquakes and the like, and its safety and reliability can be enhanced.

Further, in the vacuum insulated switchgear according to the invention, the switch is disposed in the enclosure so that its movable contact is positioned below its fixed contact. If the operating mechanical section is broken, therefore, the movable contact is moved away from the fixed contact by its own weight. Therefore, a failsafe function is fulfilled, and the safety can be enhanced.

### BRIEF DESCRIPTION OF THE DRAWINGS

FIG. 1 is a partly cross sectional side view illustrating an embodiment in which vacuum insulated switchgear of the invention is applied to a feeder panel;
FIG. 2 is a partly cross sectional front view of the embodiment illustrated in FIG. 1;
FIG. 3 is a partly cross sectional back view of the embodiment illustrated in FIG. 1;
FIG. 4 is a partly cross sectional perspective view of the embodiment illustrated in FIG. 1;
FIG. 5 is a drawing illustrating a front door illustrated in FIG. 1;
FIG. 6 is a longitudinal cross sectional view of the vacuum insulated switchgear illustrated in FIG. 1;
FIG. 7 is a partly cross sectional enlarged perspective view of an embodiment of an operating mechanism for the vacuum insulated switchgear illustrated in FIG. 1;
FIG. 8 is a side view explaining the operation of an emergency manual handle operating section of the vacuum insulated switchgear of the invention, which is applied as a feeder panel;
FIG. 9 is a partly cross sectional side view of another embodiment of a vacuum insulated switchgear of the invention, which is applied as a feeder panel ;
FIG. 10 is a partly cross sectional side view of still another embodiment of a vacuum insulated switchgear of the invention; and
FIG. 11 is a partly cross sectional side view of a still further embodiment of a vacuum insulated switchgear of the invention, which is applied as a feeder measuring board.

Reference numerals used in the drawings are: 1 denotes an enclosure, 1a a bus block, 1b a switch block, 1c a cable block, 1d a low voltage control block, 1e a front door at the front side, 1f a rear door at the rear side, 2a - 2d a grounded metal plate, 3a cable, 4 a current transformer, 5 a bus, 5a a connecting bushing, 7 a fuse, 8 a vacuum double-break three-position switch, 9 a vacuum earthing switch, 10 a single-phase wound voltage transformer, 11 an operating device, 12 epoxy resin, 20 a T shaped cable head, 20a a cable connecting terminal, 80, 91 a vacuum case, 80a, 91a an insulating cylinder, 81a, 81b, 92, a fixed contact, 82a, 82b, 93 a movable contact, 83, 84 a feeder, 85 a movable conductor, 86, 94 a vacuum insulated operating rod, 87, 95 a metal bellows, 88 an air insulated insulating operating rod, 113 a supporting plate, 200 a first operating mechanism, 300 a second operating mechanism, and 400 a third operating mechanism.

### DETAILED DESCRIPTION OF THE PREFERRED EMBODIMENTS

As mentioned before, The vacuum insulated switchgear of the invention that achieves the above mentioned objects is realized by a low-cost and simple construction.

### First Embodiment

Hereafter, description will be given to an embodiment of a vacuum insulated switchgear of the invention with reference to drawings.

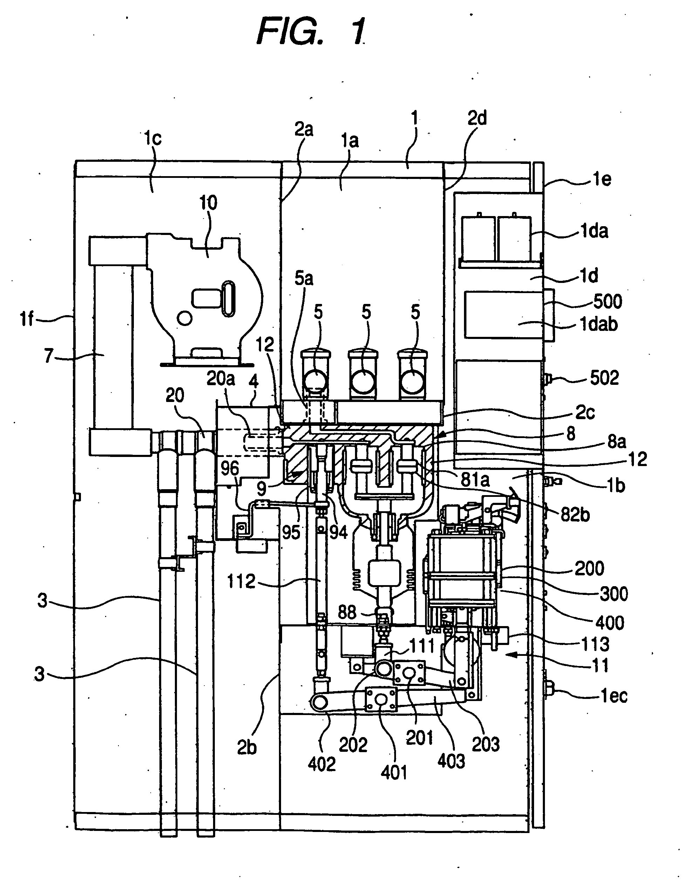

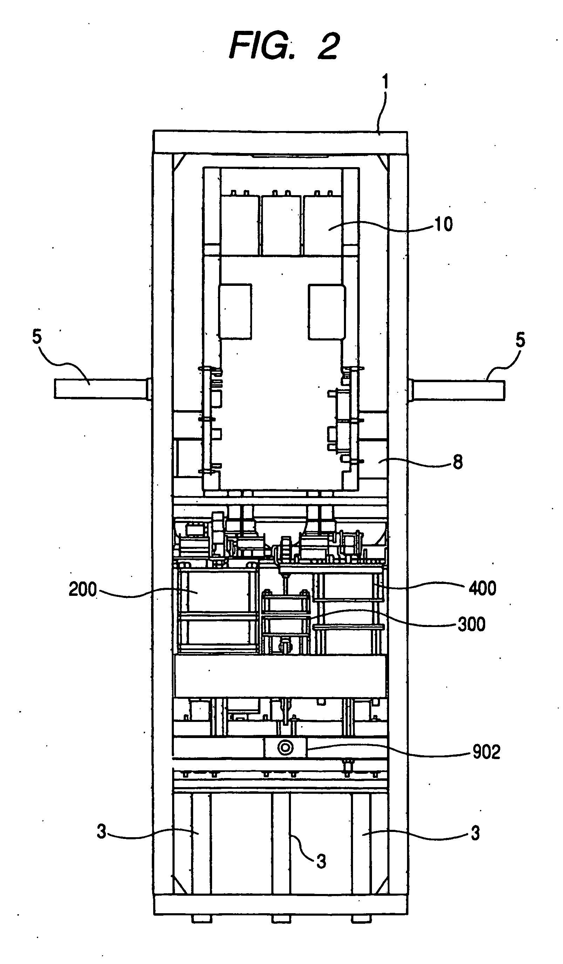

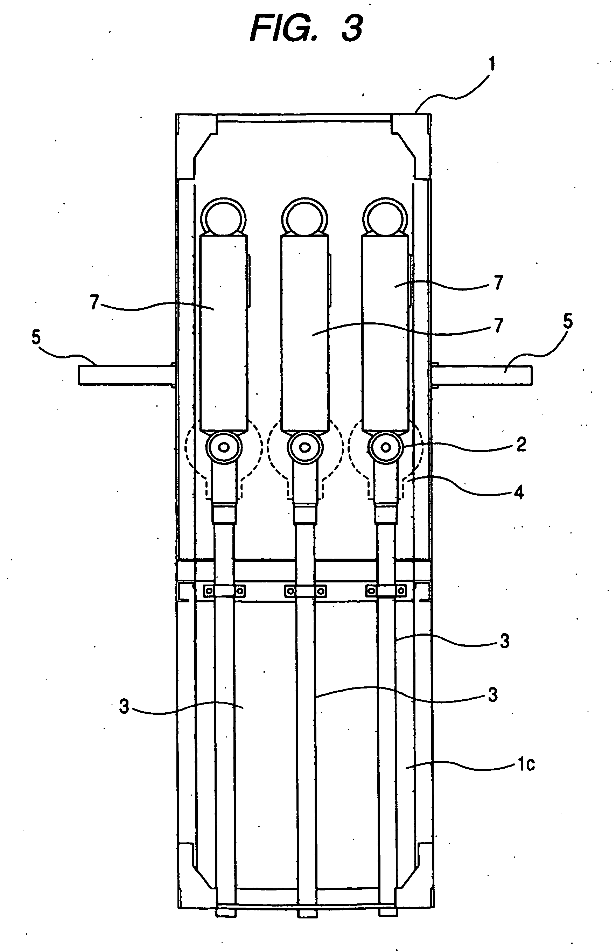

FIG. 1 to FIG. 5 illustrate an embodiment in which vacuum insulated switchgear of the invention is applied to a feeder panel.

In the vacuum insulated switchgear in these drawings, its enclosure 1 is partitioned into the following by grounded metal plates 2a, 2b, 2c, 2d disposed therein: a bus block 1a, a switch block 1b, a cable block 1c, and a low-voltage control block 1d. The enclosure 1 is provided on its front side (right side of FIG. 1) with a font door 1e and on its rear side (left side of FIG. 1) with a rear door 1f.

The bus block 1a is disposed in proximity to the center of the direction of the depth of the enclosure 1 (horizontal direction in FIG. 1) on the upper side. The switch block 1b is disposed below the bus block 1a, and the cable block 1c is disposed on the rear side of the enclosure 1 (left side of FIG. 1). The low-voltage control block 1d is disposed on the upper side of the back face of the front door 1e, and is positioned opposite to the bus block 1a.

In the bus block 1a, three-phase solid insulated buses (BS) 5 are disposed in parallel with the front face of the enclosure 1 through connecting bushings 5a (in the direction orthogonal to the plane of FIG. 1). The buses 5 are insulated by a solid insulator and are made free from gas. Avoidance of use of gas makes gas management unnecessary and the switchgear easier to handle. In addition, even when dust or foreign mater enters the room of installation, insulation is maintained and the safety remains ensured because of solid insulation.

In the switch block 1b, the following, described in detail later, are disposed: a vacuum double-break three-position switch (vacuum double-break three-position circuit breaker-disconnector CBDS) 8; a vacuum earthing switch (ES) 9; and an operating device 11.

In the cable block 1c, the following are provided: a cable connecting terminal 20a connected to the fixed contact 81a of the vacuum double-break three-position switch 8 and the fixed contact of the vacuum earthing switch 9 and led into the cable block 1c: a T-shaped cable head 20 rotatably provided on the cable connecting terminal 20a; two pairs of cables 3 (6 cables for three phases) disposed at the upper part or the lower part by rotating the T-shaped cable head 20 and connected to the terminal 20a; and a system protecting current transformer (CT) 4 provided on the circumferential surface of the cable connecting terminal 20a. In this example, the cables 3 are led into the cable block 1c from the lower part of the enclosure 1. The cable connecting terminal 20a is connected by means of a member with a fuse 7 and a single-phase wound voltage transformer (VT) 10. The fuse 7 and the single-phase wound voltage transformer 10 are disposed on the upper side in the cable block 1c.

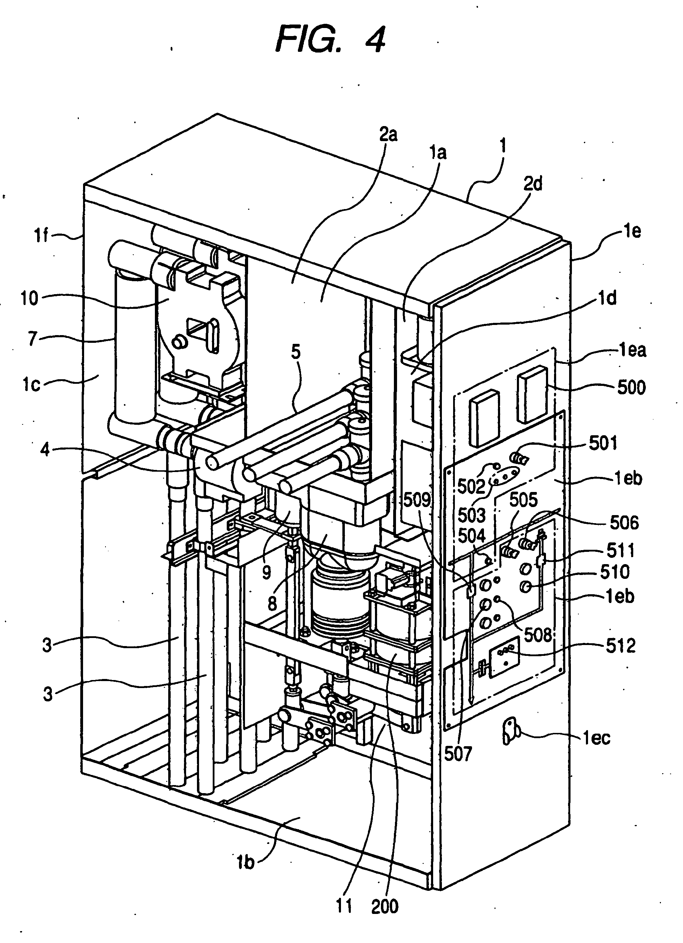

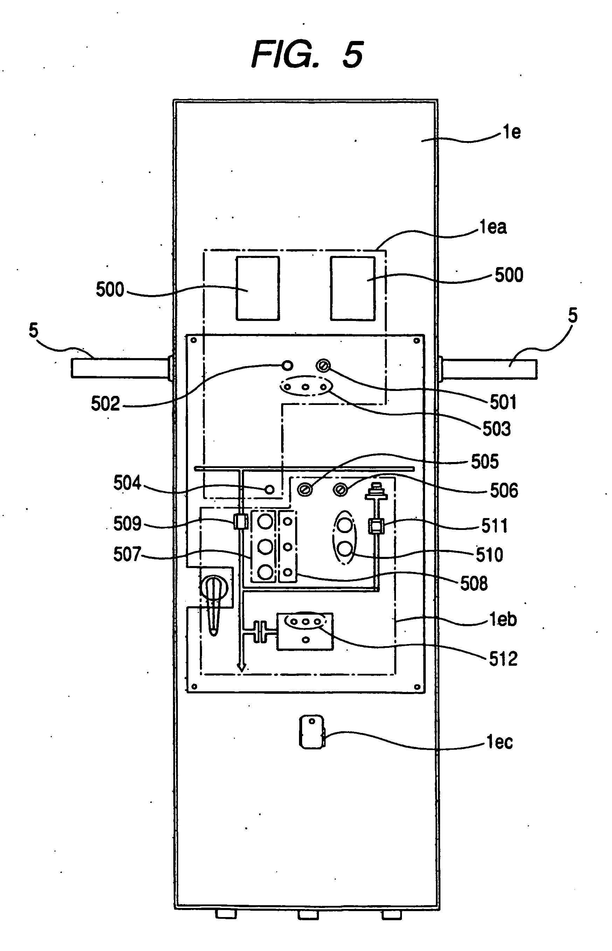

In the low-voltage control block 1d, the following is disposed on the back face of the front door 1e: a low-voltage control section composed of capacitors 1da and a protective relay 1dab. On the front face of the front door 1e, as illustrated in FIG. 4 and FIG. 5, the following are disposed from top down: an alarm display section lea for displaying alarms about grounding and short-circuiting faults, capacitor anomaly, vacuum pressure anomaly, and the like; an operating switch section 1eb including various operating switches; and the emergency manual handle operating section 1ec.

In the alarm display section lea, for example, the following are disposed: two display sections 500 for displaying grounding and short-circuiting faults; a display section 501 for enable or disable of interlock; an anomaly display section 502 for capacitor; an anomaly display section 503 for vacuum pressure; and a display section 504 for displaying the completion of capacitor charge.

In the operating switch section 1eb, for example, the following are installed: an operation selector switch 505 for the vacuum double-break three-position switch 8 and the vacuum earthing switch 9; a remote-local selector switch 506; an operating switch 507 for turning on/off or disconnecting the vacuum double-break three-position switch 8; position indicator lamps 508 for the vacuum double-break three-position switch 8; a mechanical position display section 509 for the vacuum double-break three-position switch 8; an operating switch 510 for grounding or turning off the vacuum earthing switch 9; a mechanical position display section 511 for the vacuum earthing switch 9; voltage detecting and phase indicating terminals 512; and the like.

Further, the emergency manual handle operating section 1ec is installed below them. The configuration of the emergency manual handle operating section 1ec will be described later.

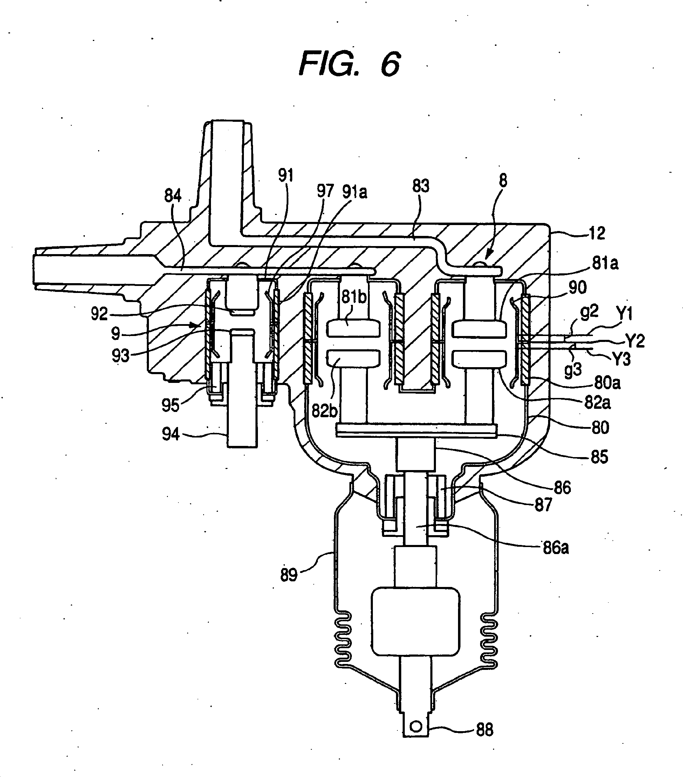

The vacuum double-break three-position switch 8 and the vacuum earthing switch 9 disposed in the above-mentioned switch block 1b are integrally molded with epoxy resin 12 as illustrated in FIG. 1 and FIG. 6. This unitizes the switch portion for size and weight reduction. The unitized switch portion is of phase separation structure, and is installed orthogonal to the front face of the enclosure 1. Further, a shielding panel is disposed between united switch portions to suppress the occurrence of a short-circuiting fault between phases. The outer surface of the above-mentioned molded epoxy resin 12 is grounded by conductive coating material applied thereto to ensure the safety in case of contact.

Detailed description will be given to the configuration of the above-mentioned unitized switch portion with reference to FIG. 1 and FIG. 6.

As illustrated in these drawings, the vacuum double-break three-position switch 8 includes: a vacuum case 80 having insulating cylinders 80a; two fixed contacts 81a and 81b housed in the vacuum case 80; two movable contacts 82a and 82b that can be respectively brought into and out of contact with the fixed contacts 81a and 81b; and arc shields 90 that are supported in the respective insulating cylinders 80a and cover the areas surrounding the left and right fixed contact 81b, 81b and movable contacts 82a, 82b including these contacts. Double break is achieved by the two fixed contacts 81a and 81b and two movable contacts 82a and 82b.

The right fixed contact 81a in FIG. 6 is connected to a bus 5 through a feeder 83, and the left fixed contact 81b is connected to a terminal 2a through a feeder 84. The movable contact 82a and the movable contact 82b are coupled with each other through a movable conductor 85 reinforced by metal, such as stainless steel, that is not annealed at high temperature. The movable conductor 85 is coupled with a vacuum insulated operating rod 86, and the vacuum insulated operating rod 86 is coupled with a coupling rod 86a. The coupling rod 86a is vacuum sealed with a metal bellows 87, and is led out to the exterior of the vacuum case 80 and coupled with an air insulated operating rod 88. The area around the joint between the air insulated operating rod 88 and the coupling rod is enveloped with a rubber or metal bellows 89 . As illustrated in FIG. 1, the air insulated operating rod 88 is coupled with an operating rod 111 operated through the operating device 11.

The two movable contacts 82a and 82b are operated through the operating device 11 coupled with the operating rod 111 so that they are stopped in the three positions illustrated in FIG. 6: closed position Y1 for energization; open position Y2 for interrupting a load current or a fault current; and disconnected position Y3 for ensuring the safety of inspecting personnel against surge voltage of lightening and the like.

As illustrated in FIG. 6, the above-mentioned two movable contacts 82a and 82b respectively ensure an interrupting gap g2 in the open position Y2. This gap is equivalent to the distance between the closed position Y1 and the open position Y2. The two movable contacts 82a and 82b respectively ensure an isolating gap g2+g3 in the disconnected position Y3. The isolating gap g2+g3 is so set that a pole-to-pole distance equivalent to substantially twice the interrupting gap g2 is ensured. As mentioned above, the isolating gap g2+g3 in isolation is set to substantially twice the interrupting gap g2. These multiplied-long gaps contribute to improvement of the insulation performance.

The following relation can be established by providing mold insulation between phases and vacuum insulation between the poles of contacts and varying the above-mentioned pole-to-pole distance and a number of poles: relation expressed as "phase-to-phase insulation > pole-to-pole insulation in isolation > pole-to-pole insulation in interruption > the pole-to-pole insulation of earthing switch." This facilitates insulation coordination between phases. As a result, the severity of grounding faults is lightened to one-line ground at the worst, and it is possible to suppress spreading of faults as much as possible. Since the above-mentioned air insulated operating rod 88 is enveloped with the rubber or metal bellows 89 and is shielded from the outside air, the reliability of insulation is ensured for long-term use.

Detailed description will be given to the configuration of the above-mentioned vacuum earthing switch 9 with reference to FIG. 1 and FIG. 6.

As illustrated in these drawings, the vacuum earthing switch 9 includes: a vacuum case 91 having an insulating cylinder 91a; a fixed contact 92 housed in the vacuum case 91 and connected to the feeder 84; a movable contact 93 that can be brought into and out of contact with the fixed contact 92; and an arc shield 97 that is supported in the insulating cylinder 91a and covers the area around the fixed contact 92 and the movable contact 93. The movable contact 93 is coupled with a movable conductor 94. The movable conductor 94 is led out of the vacuum case 91 through a metal bellows 95, and is coupled with an insulated operating rod 112 for the vacuum earthing switch 9. Stainless steel is used for the material of the vacuum case 80 and this enhances their environment resistance. As illustrated in FIG. 1, the movable contact 93 is connected to ground by a conductor 96 through the movable conductor 94.

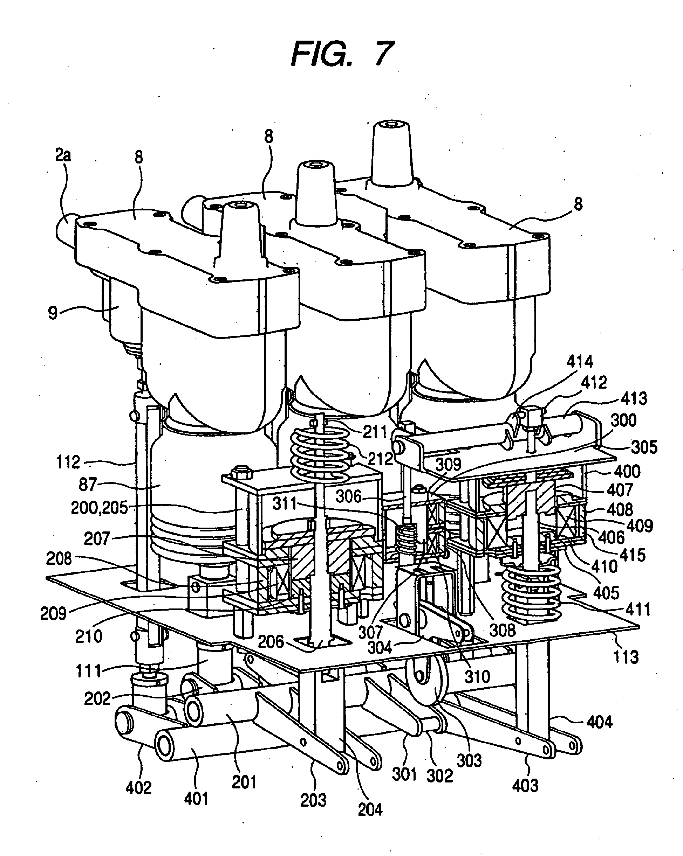

Detailed description will be given to the configuration of the operating device 11 with reference to FIG. 1 and FIG. 7. The operating device 11 is for changing the position of the vacuum double-break three-position switch 8 among the three positions: the closed position Y1 for energization; the open position Y2 for interrupting a load current or a fault current; and the disconnected position Y3 for ensuring the safety of inspecting personnel against surge voltage of lightening and the like. The operating device 11 is also for turning on and off the vacuum earthing switch 9.

As illustrated in these drawings, the components of the operating device 11 are fixed on a supporting plate 113 provided in the switch block 1b. The operating device 11 is substantially constructed of: a first operating mechanism 200 for shifting the movable contacts 82a, 82b of the vacuum double-break three-position switch 8 between the closed position Y1 and the open position Y2; a second operating mechanism 300 for shifting the movable contacts 82a, 82b of the vacuum double-break three-position switch 8 between the open position Y2 and the disconnected position Y3; and a third operating mechanism 400 for operating the movable contact 93 of the vacuum earthing switch 9.

Description will be given to the configuration of the first operating mechanism 200 with reference to FIG. 7 and FIG. 1. As illustrated in these drawings, a first shaft 201 is rotatably supported by the supporting plate 113, and three levers 202 are fixed on the first shaft 201 on one side in the direction of the axis of the first shaft 201. The tips of the levers 202 are respectively coupled with the operating rods 111. On the opposite side of the first shaft 201, a lever 203 is fixed in the opposite side to the direction of the levers 202.

As illustrated in FIG. 7, the lever 203 is coupled with the driving shaft 206 of an electromagnet 205 through a coupling member 204. On the driving shaft 206, there is fixed a moving core 207 having T-shaped sections. Around the moving core 207, there is provided a fixed core 208 fixed on the supporting plate 113, and in the fixed core 208, there are disposed a coil 209 and an annular permanent magnet 210. On the opposite side to the lever 203 with respect to the driving shaft 206, there is provided a trip spring bearing 211, and a trip spring 212 is provided between the trip spring bearing 211 and the fixed core 208.

The electromagnet 205 is so constructed that the following is implemented when the movable contacts 82a, 82b are held in the closed position Y1: holding force countervailing the accumulate energy of the trip spring 212 and a pressure contact spring (not shown) provided on the air insulated operating rod 88 can be obtained by the attractive force of the coil 209 and the permanent magnet 210.

Description will be given to the configuration of the second operating mechanism 300 with reference to FIG. 7. The second operating mechanism 300 is for shifting the movable contacts 82a, 82b of the vacuum double-break three-position switch 8 between the open position Y2 and the disconnected position Y3. As illustrated in the drawing, a lever 301 is fixed on the intermediate portion of the first shaft 201 in the direction of length on the supporting plate 113. The lever 301 is provided at its tip with an interlock pin 302. The pin 302 has a roller 303 abutted against it, and the roller 303 is rotatably provided at the end of a crank lever 304 on one side. The crank lever 304 is supported so that it can be rotated to the underside of the supporting plate 113.

The end of the crank lever 304 on the other side is coupled with the driving shaft 306 of an electromagnet 305, and on the driving shaft 306, there is fixed a moving core 307. Around the moving core 307, there is provided a fixed core 308 fixed on the supporting plate 113, and in the fixed core 308, there are disposed two coils 309, 310 in the vertical direction. A return spring 311 is disposed between the moving core 307 and the upper part of the fixed core 308.

The electromagnet 305 excites the individual coils 309, 310 to move the moving core 307 in the vertical direction, and the crank lever 304 is rotated by this operation. The position of abutment between the interlock pin 302 and the roller 303 is changed by this rotation of the crank lever 304. As a result, the lever 203 is prevented from rotating around the first shaft 201 or permitted to rotate.

Thus, the movable contacts 82a, 82b of the vacuum double-break three-position switch 8 are prevented from moving from the open position Y2 to the disconnected position Y3 illustrated in FIG. 6 and held in the open position Y2. Or, they are permitted to move from the open position Y2 to the disconnected position Y3. That is, this construction makes a first interlock mechanism of the movable contacts 82 of the vacuum double-break three-position switch 8 between the open position Y2 and the disconnected position Y3.

Description will be given to the configuration of the third operating mechanism 400 for operating the movable contact 93 of the vacuum earthing switch 9 with reference to FIG. 7. As illustrated in the drawing, a second shaft 401 is rotatably supported on the supporting plate 113, and on one side of the second shaft 401, there are fixed three levers 402 in the direction of the axis of the second shaft 401. The tips of the levers 402 are respectively coupled with the operating rods 112, and on the other side of the second shaft 401, there is fixed a lever 403 in the opposite direction to the levers 402.

The lever 403 is coupled with the driving shaft 406 of an electromagnet 405 through a coupling member 404. The electromagnet 405 is constructed similarly with the above-mentioned electromagnet 205 of the first operating mechanism 200. On the driving shaft 406, there is fixed a moving core 407 having T-shaped sections. Around the moving core 407, there is provided a fixed core 408 fixed on the supporting plate 113 , and in the fixed core 408, there are disposed a coil 409 and an annular permanent magnet 410. Between the fixed core 408 and the lower face of the supporting plate 113, there is provided a trip spring 411.

Between the third operating mechanism 400 of the vacuum earthing switch 9 and the second operating mechanism 300, there is provided a second interlock mechanism. The second operating mechanism 300 is for shifting the movable contacts 82a, 82b of the vacuum double-break three-position switch 8 between the open position Y2 and the disconnected position Y3. The second interlock mechanism is related to various elements so that the operation described below is carried out. When the movable contacts 82a, 82b of the vacuum double-break three-position switch 8 are in a third position, or the disconnected position Y3 for ensuring the safety of inspecting personnel against surge voltage of lightening and the like, the second interlock mechanism performs the following operation: it enables the movable contact 93 of the vacuum earthing switch 9 to be brought into contact with the fixed contact by the electromagnet 405. When the movable contacts 82a, 82b of the vacuum double-break three-position switch 8 are in a second position, or the open position Y2 for interrupting a current, it disables the movable contact 93 of the vacuum earthing switch 9 to be brought into contact with the fixed contact by the electromagnet 405. When the movable contact 93 is in contact with the fixed contact 92 of the vacuum earthing switch 9, it disables the operation of the electromagnet 205 of the second operating mechanism 300.

Specifically, the above-mentioned second interlock mechanism is constructed of: a pin 412 provided at the lower end of the driving shaft 406 of the electromagnet 405 of the third operating mechanism 400; a shaft 413 provided in parallel with the second shaft 401 below the electromagnet 305 of the operating mechanism 300; a lever (not shown) provided on the shaft 413 and coupled with the lower end of the driving shaft 306 of the electromagnet 305 of the second operating mechanism 300; and a lever 414 provided on the shaft 413 and engaged with the pin 412.

Description will be given to the operation of an embodiment in which vacuum insulated switchgear of the invention is applied to a feeder panel with reference to FIG. 1 to FIG. 7.

When the movable contacts 82a, 82b of the vacuum double-break three-position switch 8 are set in the open position Y2 for interrupting a load current or a fault current, the following takes place: the lever 203 of the first operating mechanism 200 is supplied with counterclockwise torque in FIG. 7 with the first shaft 201 taken as the fulcrum by return force of the trip spring 212 of the first operating mechanism 200.

Thus, the interlock pin 302 provided at the tip of the lever 301 constructing the second operating mechanism 300 is abutted against the outer circumferential surface of the roller 303. Further counterclockwise rotation is prevented by return force of the trip spring 212. That is, transition from the open position Y2 for interrupting a load current or a fault current to the disconnected position Y3 for ensuring the safety of inspecting personnel against surge voltage of lightening and the like is arrested.

Description will be given to the operation for transition from the open position Y2 to the closed position Y1 by the first operating mechanism 200 (making operation).

When the coil 209 of the electromagnet 205 of the first operating mechanism 200, the driving shaft 206 is moved downward in FIG. 7. By this downward movement of the driving shaft 206, the levers 202 are rotated clockwise in FIG. 7 with the first shaft 201 taken as the fulcrum, and the movable contacts 82a, 82b are moved toward the closed position Y1. In this closed state, energy is accumulated in the trip spring 212 and the pressure contact spring, and these springs are ready for contact parting operation.

As the result of this making operation, the interlock pin 302 is parted from the outer circumferential surface of the roller 303. The roller 303 does not change its position because of the return spring 311 of the second operating mechanism and is held in its initial position.

As mentioned above, the second operating mechanism 300 constructs a mechanical interlock mechanism so that the following is implemented to satisfy needs for enhanced safety: when the vacuum double-break three-position switch 8 is closed, isolating operation by the first operating mechanism 200 is disabled. That is, the following operation as one of mechanical interlocks between interruption and isolation is accomplished: "when a movable contact is in a closed position, isolating operation is disabled."

Description will be given to the operation for transition from the closed position Y1 to the open position Y2 by the first operating mechanism 200 (contact parting operation).

When the coil 209 of the electromagnet 205 of the first operating mechanism 200 is excited in the opposite direction to the direction in making operation to cancel the magnetic flux of the permanent magnet 210, the following takes place: the driving shaft 206 is moved upward in FIG. 7 by the accumulated energy of the trip spring 212 and the pressure contact spring. By this upward movement of the driving shaft 206, the lever 301 is rotated counterclockwise in FIG. 7 through the lever 203 and the first shaft 201. However, the counterclockwise rotation of the lever 301 is suppressed by the abutment between the interlock pin 302 of the second operating mechanism and the outer circumferential surface of the roller 303. As a result, the movable contacts 82a, 82b of the vacuum double-break three-position switch 8 can be held in the open position Y2.

Description will be given to the operation for transition from the open position Y2 to the disconnected position Y3 by the second operating mechanism 300 (isolating operation).

When the upper coil 309 of the electromagnet 305 of the second operating mechanism 300 is excited with the vacuum double-break three-position switch 8 in the closed state, mentioned above, the driving shaft 306 is moved downward against the return spring 311. The downward movement of the driving shaft 306 rotates the roller 303 clockwise in FIG. 7 through the crank lever 304. By the clockwise rotation of the roller 303, the position of abutment between the roller 303 and the interlock pin 302 is shifted upward by the force of trip spring 212. As a result, the operating rods 111 are moved downward through the lever 301, first shaft 201, and levers 202, and the movable contacts 82a, 82b of the vacuum double-break three-position switch 8 are moved to the disconnected position Y3.

In this isolated state, the moving core 207 of the electromagnet 205 of the first operating mechanism 200 is positioned outside the coil 209. For this reason, even if the coil 209 of the electromagnet 205 of the first operating mechanism 200 is excited in the isolated state, substantially no magnetic flux passes through the moving core 207 and attractive force is not produced. That is, the following operation as a mechanical interlock between a circuit breaker and a disconnector is accomplished: when a movable contact is in a disconnected position, making operation is disabled."

Description will be given to the operation for transition from the disconnected position Y3 to the open position Y2 by the second operating mechanism 300. When the upper coil 309 of the electromagnet 205 of the second operating mechanism 300 is excited in the isolated state, the following takes place: the roller 303 pushes downward the interlock pin 302 abutted against it by the downward movement of the driving shaft 206 and the counterclockwise rotation of the crank lever 304. As a result, the movable contacts 82a, 82b of the vacuum double-break three-position switch 8 are moved to the open position Y2.

When the movable contacts 82a, 82b of the vacuum double-break three-position switch 8 are in the open position Y2 for interrupting a current, the following takes place: the lever 414 of the second interlock mechanism is engaged with the pin 412 provided at the lower end of the driving shaft 406 of the electromagnet 405 of the third operating mechanism 400. Therefore, it is disabled by the electromagnet 405 to close the movable contact 93 of the vacuum earthing switch 9.

When the movable contact 93 is in contact with the fixed contact 92 of the vacuum earthing switch 9, the lever 414 of the second interlock mechanism is engaged with the pin 412 provided at the upper end of the driving shaft 406 of the electromagnet 405. Therefore, operation by the second operating mechanism 300 is disabled. Further, when the movable contacts 82a, 82b of the vacuum double-break three-position switch 8 are in the disconnected position Y3 for ensuring the safety of inspecting personnel against surge voltage of lightening and the like, the following takes place: the lever 414 of the second interlock mechanism enables the movement of the pin 412 provided at the upper end of the driving shaft 406 of the electromagnet 405. Therefore, the vacuum earthing switch 9 can be turned on by the third operating mechanism 400.

In the above-mentioned embodiment, the rotatable roller 303 is used for the second operating mechanism 300. A partly arc-shaped cam may be substituted for the roller 303. The disposition of the first operating mechanism 200 and the third operating mechanism 400 may be changed as appropriate. In the above-mentioned embodiment, an electromagnetic operating system is applied to the first operating mechanism 200. Instead, any other operating system, such as electric spring system, may be adopted.

In the above-mentioned embodiment of the invention, the vacuum double-break three-position switch 8, which is the heaviest one of the devices housed in the enclosure 1, and the operating device 11 are disposed as illustrated in FIG. 1. That is, they are disposed in the space lower than the intermediate portion of the enclosure 1 in the direction of height. Therefore, the center of gravity of the entire switchgear can be set low. As a result, the safety of transportation and installation work for the switchgear is enhanced, and if an earthquake happens, the installed switchgear is prevented from being toppled and the safety can be ensured.

In the above-mentioned embodiment of the invention, the vacuum double-break three-position switch 8 is disposed in the enclosure 1 so that its movable contacts 82a, 82b are positioned below its fixed contacts 81a, 81b. In addition, the operating device 11 for operating the movable contacts 82a, 82b is also disposed at a lower level in the enclosure 1 in the direction of height in a lump. If the operating device 11 becomes faulty for some reason, therefore, the movable contacts 82a, 82b of the vacuum double-break three-position switch 8 are moved downward by their own weight and parted from the fixed contacts 81a, 81b. Thus, a failsafe function is fulfilled, and the safety can be enhanced.

In the above-mentioned embodiment of the invention, the following measures are taken in addition to the above construction: the buses 5 are disposed above the vacuum double-break three-position switch 8, and the vacuum double-break three-position switch 8 and the operating device 11 are disposed at a lower level. Therefore, no operating device is positioned near the joints of the buses 5. This makes it possible to enhance the safety of work of connecting the buses 5.

In the above-mentioned embodiment of the invention, the work of connecting a bus 5 to a bus joint is conducted as follows: the bus 5 is guided from a side of the enclosure 1 into the enclosure 1 and this bus 5 is pulled down from above the bus joint toward the bus joint. As illustrated in FIG. 1, the buses 5 and the bus joints are disposed above the vacuum double-break three-position switch 8. Therefore, the buses 5 and the bus joints are positioned at the level of the worker's breast, and the worker can stably conduct bus connecting work without being required to be in stressful posture. When the front door 1e is opened, the low-voltage control section positioned on the back face of the front door 1e is moved together out of the enclosure 1. Therefore, the working space for the above-mentioned bus connecting work can be ensured by an amount equivalent to the movement of the low-voltage control section.

A required number of pieces of switchgear are disposed in line before the above-mentioned bus connecting work is conducted. In the above-mentioned embodiment, since a bus connecting work can be conducted after the required switchgears being arranged in a state that each of the switchgears is provided with necessary components that have been subjected to routine tests, the reliability can be enhanced.

As mentioned above, the low-voltage control section positioned on the back face side of the front door 1e is unitized, and the low-voltage control section detachably attached to the back face of the front door 1e. This makes it possible to easily check the low-voltage control section with ease during maintenance inspection. In addition, a protective relay and the like housed in the low-voltage control section can be easily replaced.

On the front face of the above-mentioned front door 1e, as illustrated in FIG. 4 and FIG. 5, the alarm display section lea is disposed at the level of workers' eyes and the operating switch section 1eb including various operating switches is disposed at the level of workers' hands. Therefore, workers can easily and efficiently conduct inspecting work. Further, the emergency manual handle operating section 1ec is disposed in a lower stage different from the stage of the operating switch section 1eb for normal operation. Therefore, the possibility that a worker manually operates it without careful consideration is minimized.

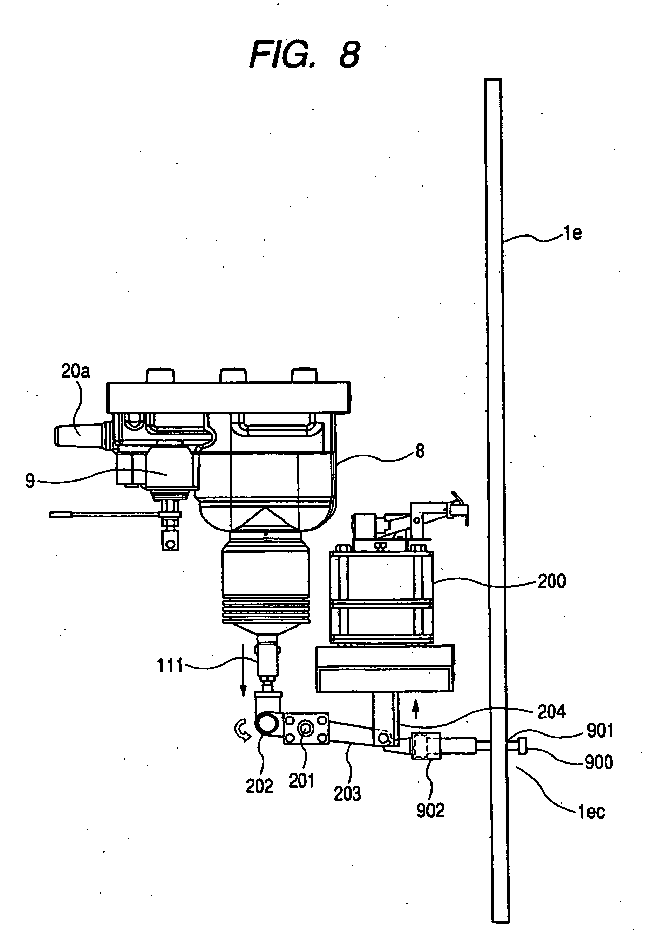

The above-mentioned emergency manual handle operating section 1ec is operated as illustrated in FIG. 8, for example. That is, the tip of a manual handle 900 is inserted into a hole 901 in the front door 1e, and is screwed into a threaded portion 902 fixed on a side panel of the enclosure 1. Thus, the conical tip of the manual handle 900 is abutted against the lower end of the coupling member 204 of the first operating mechanism 200 in the operating device 11, and pushes the coupling member 204 upward. This makes the accumulated energy of the trip spring 212 and the pressure contact spring larger than the magnetic force of the permanent magnet 207 of the first operating mechanism 200. As a result, the movable contacts 82a, 82b of the vacuum double-break three-position switch 8 are moved downward, and an open-circuit condition can be established. When the manual handle 900 is thereafter pulled out of the hole 901 in the front door 1e, the operation can be completed.

In addition, as illustrated in FIG. 1, the voltage transformer 10 and the protection fuse 7 are disposed in the cable block 1c on the rear face side of the enclosure 1. When the rear door 1f of the enclosure 1 is opened, therefore, the voltage transformer 10 and the protection fuse 7 can be easily inspected, and this enhances the working efficiency.

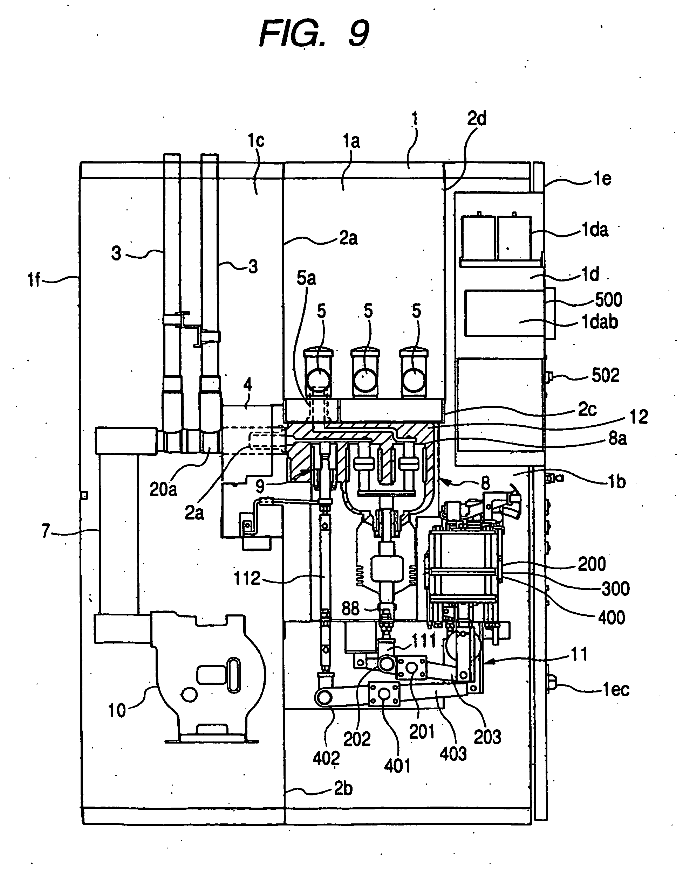

FIG. 9 illustrates another embodiment in which vacuum insulated switchgear of the invention is applied to a feeder panel. In FIG. 9, the members marked with the same reference numerals as in FIG. 1 are those identical with or equivalent to those in FIG. 1, and the detailed description of them will be omitted.

This embodiment is so constructed that two cables 3 in the cable block 1c are pulled out to above the enclosure 1 and the voltage transformer 10 and the protection fuse 7 are disposed at the lower part in the cable block 1c. The other constructions are the same as illustrated in FIG. 1.

According to this embodiment, the same effect as the above-mentioned embodiment can be obtained, and further the switchgear can be flexibly connected and installed in correspondence with a wiring pattern of a power cable on the installation site.

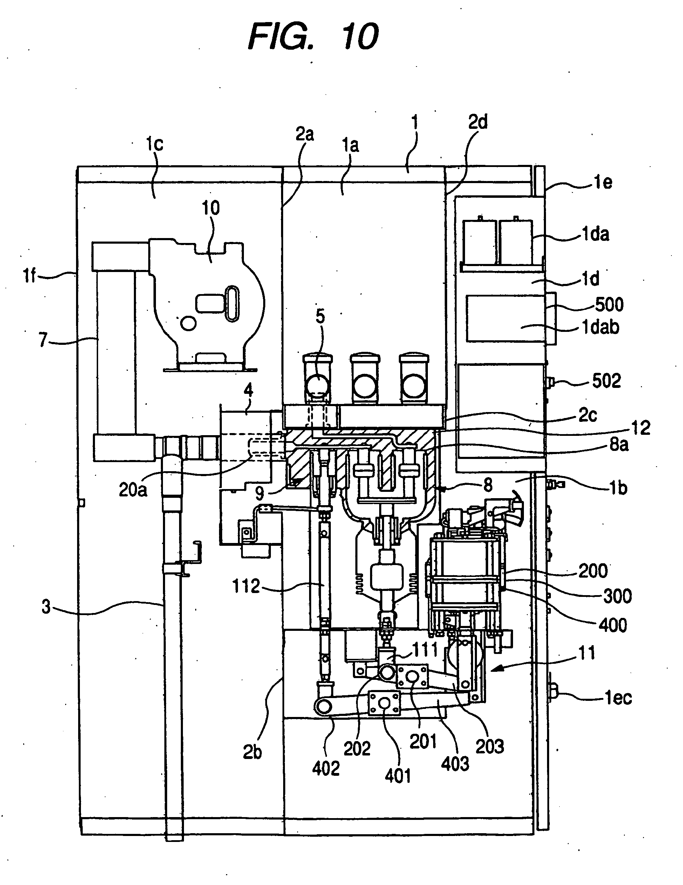

FIG. 10 illustrates a further embodiment in which vacuum insulated switchgear of the invention is applied to a feeder panel. In FIG. 10, the members marked with the same reference numerals as in FIG. 1 are those identical with or equivalent to those in FIG. 1, and the detailed description of them will be omitted.

In this embodiment, one cable 3 is provided in the cable block 1c to cope with cases where an amount of power supply can be reduced. This cable 3 is pulled out to below the enclosure 1, and the voltage transformer 10 and the protection fuse 7 are disposed at the lower part in the cable block 1c. The other constructions are the same as illustrated in FIG. 1.

According to this embodiment, the same effect as the above-mentioned embodiments can be obtained, and further the switchgear can be flexibly connected and installed in correspondence with a wiring pattern of a power cable on the installation site, needless to add. Various amounts of power supply can be flexibly coped with.

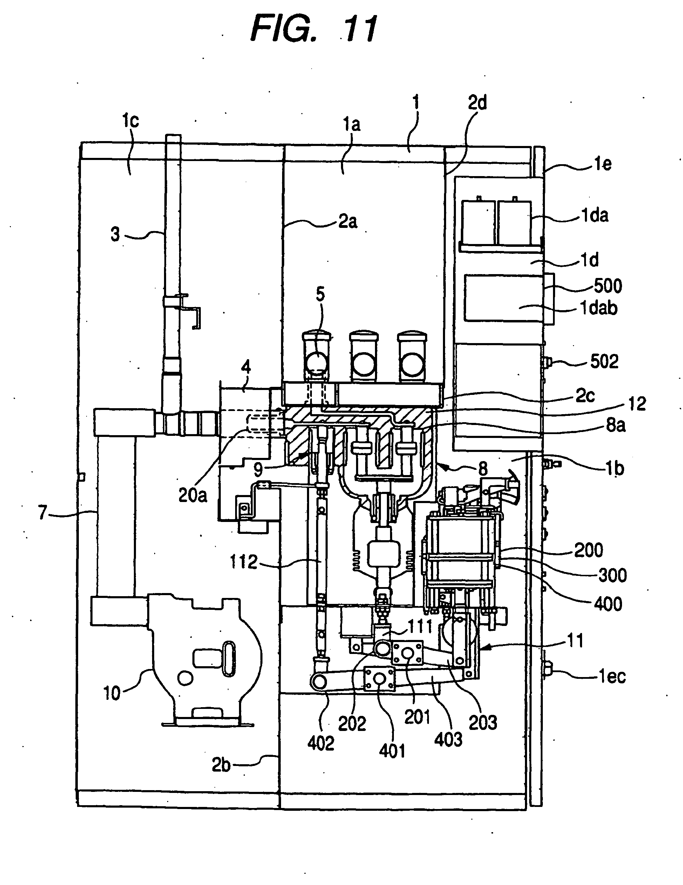

FIG. 11 illustrates a further embodiment in which vacuum insulated switchgear of the invention is applied to a feeder panel. In FIG. 11, the members marked with the same reference numerals as in FIG. 1 are those identical with or equivalent to those in FIG. 1, and the detailed description of them will be omitted.

In this embodiment, one cable 3 is provided in the cable block 1c to cope with cases where an amount of power supply can be reduced as in the embodiment illustrated in FIG. 10. This cables 3 is pulled out to above the enclosure 1, and the voltage transformer 10 and the protection fuse 7 are disposed at the lower part in the cable block 1c. The other constructions are the same as illustrated in FIG. 1.

According to this embodiment, the same effect as the embodiment illustrated in FIG. 10 can be obtained.

In the above-mentioned embodiments, the voltage transformer 10 and the protection fuse 7 are provided in the cable block 1c. However, they may be omitted as required.

## Claims

1. A vacuum insulated switchgear comprising:
a vacuum enclosure (1) defined by a grounded metal plate (2a-d) and having a switch block (1b) ;
a cable block (1c) positioned besides the switch block;
wherein a switch (8) is installed in the switch block, a bus (5) is electrically connected with the switch and installed in a bus block (1a); and a cable (3) is electrically connected with the switch and installed in the cable block,
**characterised in that** the switch block is positioned below the intermediate portion of the enclosure in its height direction, the bus block is positioned above the switch block, and
the switch and an operating device (11) for it are disposed in the switch block, and
the switch is disposed such that its movable contact (82a) is positioned below its fixed contact (81a).

2. The vacuum insulated switchgear of Claim 1,
wherein the enclosure (1) further has a low-voltage control block (1d) with a low-voltage control section installed therein and an openable/closable door (1e), and
wherein the low-voltage control block is disposed opposite to the bus block (1a) on the rear side of a door of the enclosure.

3. The vacuum insulated switchgear of Claim 1,
wherein the enclosure (1) further has a low-voltage control block (1d) with a low-voltage control section installed therein and an openable/closable door (1e), and
wherein on the front side of the door, there are disposed from top down an alarm display section (1ea) for displaying an anomaly and the like in the each device, an operating switch section (1eb) for each device, and an emergency manual handle operating section (1ec) operated in an emergency.

4. The vacuum insulated switchgear of Claim 1,
wherein the cable block (1c) further has therein a protection fuse (7) and a voltage transformer (10) connected to the cable (3), and
wherein the protection fuse and the voltage transformer are disposed either at the upper part or at the lower part in the cable block.

5. The vacuum insulated switchgear any of the preceding claims, further comprising:
a lever mechanism (202, 203) coupling together the switch (8) and the operating device (11).

6. The vacuum insulated switchgear of any of the preceding claims,
wherein the switch (8) is a vacuum double-break three-position switch having opening/closing and isolating functions.

7. The vacuum insulated switchgear of any of the preceding claims,
wherein the operating device (11) is an electromagnetically driven operating device.

8. The vacuum insulated switchgear of claim 2 or 3, further comprising:
a vacuum double-break three-position switch (8) having opening/closing and isolating functions, installed in the switch block (1b) so that a movable contact (82a) thereof is positioned below a fixed contact (81a) thereof;
a vacuum earthing switch installed in the switch block so that a movable contact thereof is positioned below a fixed contact thereof; and
a lever mechanism (202, 203) coupling together individual movable contacts of the vacuum double-break three-position switch and the vacuum earthing switch and the electromagnetically driven operating device, wherein the low-voltage control block (1d) is disposed in a position opposite the bus block (1a) on the rear side of a door of the enclosure.

9. The vacuum insulated switchgear of Claim 8,
wherein in the cable block (1c), at least one cable (3) connected to a fixed contact (81a) of the switch through a current transformer for system protection is installed so that the cable can be led out to above or below the enclosure (1).

10. The vacuum insulated switchgear of Claim 9,
wherein a protection fuse (7) and a voltage transformer (10) connected to the cable are disposed at the upper part or the lower part in the cable block.

## Patentansprüche

1. Vakuumisolierte Schalteinreichung, umfassend:
eine durch eine geerdete Metallplatte (2a-d) definierte Vakuumhülle (1) mit einem Schaltblock (1b);
einen neben dem Schaltblock angeordneten Kabelblock (1c);
wobei ein Schalter (8) im Schaltblock installiert ist, eine Sammelleitung (5) mit dem Schalter elektrisch verbunden und in einen Sammelleitungsblock (1a) installiert ist sowie ein Kabel (3) mit dem Schalter elektrisch verbunden und im Kabelblock installiert ist,
**gekennzeichnet dadurch, daß** der Schaltblock unterhalb des Zwischenabschnitts der Hülle in ihrer Höhenrichtung angeordnet ist und der Sammelleitungsblock oberhalb des Schaltblocks angeordnet ist, und
der Schalter und ein Bedienteil (11) für diesen im Schaltblock angeordnet ist, und
der Schalter so angeordnet ist, daß sein beweglicher Kontakt (82a) unterhalb seines festen Kontakts (81a) angeordnet ist.

2. Vakuumisolierte Schalteinrichtung nach Anspruch 1,
wobei die Hülle (1) ferner einen Niederspannungssteuerungsblock (1d) mit einer darin installierten Niederspannungssteuerungssektion und einer Tür (le), die geöffnet und geschlossen werden kann, aufweist und
wobei der Niederspannungssteuerungsblock gegenüber dem Sammelleitungsblock (1a) auf der Rückseite einer Tür der Hülle angeordnet ist.

3. Vakuumisolierte Schalteinrichtung nach Anspruch 1,
wobei die Hülle (1) ferner einen Niederspannungssteuerungsblock (1d) mit einer darin installierten Niederspannungssteuerungssektion und einer Tür (1e), die geöffnet und geschlossen werden kann, aufweist und
wobei auf der Vorderseite der Tür von oben nach unten eine Alarmanzeigesektion (1ea) zum Anzeigen einer Anomalie oder ähnlichem in jedem Gerät, eine Bedienschaltersektion (1ed) für jedes Gerät sowie eine in einem Notfall zu bedienende Notfallhandgriffsbedienungssektion (1ec) angeordnet sind.

4. Vakuumisolierte Schalteinrichtung nach Anspruch 1,
wobei der Kabelblock (1c) ferner eine Schutzsicherung (7) und einen mit dem Kabel (3) verbundenen Spannungswandler (10) beinhaltet, und
wobei die Schutzsicherung und der Spannungswandler entweder am oberen oder am unteren Teil im Kabelblock angeordnet sind.

5. Vakuumisolierte Schalteinrichtung nach einem der vorhergehenden Ansprüche, ferner umfassend:
einen Hebelmechanismus (202, 203), der den Schalter (8) und das Bedienteil (11) miteinander verbindet.

6. Vakuumisolierte Schalteinrichtung nach einem der vorhergehenden Ansprüche,
wobei der Schalter (8) ein Vakuum-Dreiwegschalter mit doppelter Unterbrechung mit Öffnungs-/Schließ- und Isolierfunktionen ist.

7. Vakuumisolierte Schalteinrichtung nach einem der vorhergehenden Ansprüche,
wobei das Bedienteil (11) ein elektromagnetisch betriebenes Bedienteil ist.

8. Vakuumisolierte Schalteinrichtung nach Anspruch 2 oder 3, ferner umfassend:
einen Vakuum-Dreiwegschalter (8) mit doppelter Unterbrechung mit Öffnungs-/Schließ- und Isolierfunktionen, der im Schaltblock (1b) installiert ist, so daß einer seiner beweglichen Kontakte (82a) unterhalb eines seiner festen Kontakte (81a) angeordnet ist;
ein Vakuumerdungsschalter, der im Schaltblock installiert ist, so daß einer seiner beweglichen Kontakte unterhalb eines seiner festen Kontakte angeordnet ist; und
einen Hebelmechanismus (202, 203), der einzelne bewegliche Kontakte des Vakuumdreiwegschalters mit doppelter Unterbrechung und des Vakuumerdungsschalters und des elektromagnetisch betriebenen Bedienteils miteinander verbindet, wobei der Niederspannungssteuerungsblock (1d) an einer Stelle gegenüber dem Sammelleitungsblock (1a) auf der Rückseite einer Tür der Hülle angeordnet ist.

9. Vakuumisolierte Schalteinrichtung nach Anspruch 8,
wobei im Kabelblock (1c) mindestens ein mit einem festen Kontakt (81a) des Schalters über einen Stromwandler zum Schritt des Systems verbundenes Kabel (3) so installiert ist, daß es oberhalb oder unterhalb der Hülle (1) nach außen geführt werden kann.

10. Vakuumisolierte Schalteinrichtung nach Anspruch 9,
wobei eine Schutzsicherung (7) und ein mit dem Kabel verbundener Spannungswandler (10) am oberen oder am unteren Teil im Kabelblock angeordnet sind.

## Revendications

1. Appareillage de commutation isolé sous vide comportant :
un boîtier sous vide (1) défini par une plaque métallique mise à la masse (2a-d) et ayant un bloc de commutation (1b),
un bloc de câble (1c) positionné hors du bloc de commutation,
dans lequel un commutateur (8) est installé dans le bloc de commutation, un bus (5) est électriquement connecté au commutateur et installé dans un bloc de bus (1a), et un câble (3) est électriquement connecté au commutateur et installé dans le bloc de câble,
**caractérisé en ce que** le bloc de commutation est positionné sous la partie intermédiaire du boîtier dans la direction de sa hauteur, le bloc de bus est positionné au-dessus du bloc de commutation, et
le commutateur et un dispositif opérationnel (11) pour celui-ci sont disposés dans le bloc de commutation, et
le commutateur est disposé de sorte que son contact mobile (82a) est positionné sous son contact fixe (81a).

2. Appareillage de commutation isolé sous vide selon la revendication 1,
dans lequel le boîtier (1) a en outre un bloc de commande basse tension (1d) ayant une section de commande basse tension installée dans celui-ci et une porte à ouverture/fermeture (le), et
dans lequel le bloc de commande basse tension est disposé à l'opposé du bloc de bus (1a) sur la face arrière d'une porte du boîtier.

3. Appareillage de commutation isolé sous vide selon la revendication 1,
dans lequel le boîtier (1) a en outre un bloc de commande basse tension (1d) ayant une section de commande basse tension installée dans celui-ci et une porte à ouverture/fermeture (le), et
dans lequel sur la face avant de la porte, une section d'affichage d'alarme (1ea) pour afficher une anomalie et analogue dans chaque dispositif, une section de commutation de fonctionnement (leb) pour chaque dispositif, et une section d'actionnement de poignée manuelle d'urgence (1ec) actionnée lors d'une urgence sont disposées de haut en bas.

4. Appareillage de commutation isolé sous vide selon la revendication 1,
dans lequel le bloc de câble (1c) contient en outre un fusible de protection (7) et un transformateur de tension (10) connectés au câble (3), et
dans lequel le fusible de protection et le transformateur de tension sont disposés soit au niveau de la partie supérieure soit au niveau de la partie inférieure du bloc de câble.

5. Appareillage de commutation isolé sous vide selon l'une quelconque des revendications précédentes, comportant en outre :
un mécanisme à levier (202, 203) couplant ensemble le commutateur (8) et le dispositif opérationnel (11) .

6. Appareillage de commutation isolé sous vide selon l'une quelconque des revendications précédentes,
dans lequel le commutateur (8) est un commutateur à trois positions deux directions sous vide ayant des fonctions d'ouverture/fermeture et d'isolement.

7. Appareillage de commutation isolé sous vide selon l'une quelconque des revendications précédentes,
dans lequel le dispositif opérationnel (11) est un dispositif opérationnel commandé de manière électromagnétique.

8. Appareillage de commutation isolé sous vide selon la revendication 2 ou 3, comportant en outre :
un commutateur à trois positions deux directions sous vide (8) ayant des fonctions d'ouverture/fermeture et d'isolement, installé dans le bloc de commutation (1b) de sorte qu'un contact mobile (82a) de celui-ci est positionné sous un contact fixe (81a) correspondant,
un commutateur de mise à la terre sous vide installé dans le bloc de commutation de sorte qu'un contact mobile de celui-ci est positionné sous un contact fixe correspondant, et
un mécanisme à levier (202, 203) couplant ensemble des contacts mobiles individuels du commutateur à trois positions deux directions sous vide et du commutateur de mise à la terre sous vide et du dispositif opérationnel commandé de manière électromagnétique, dans lequel le bloc de commande basse tension (1d) est disposé dans une position opposée au bloc de bus (1a) sur la face arrière d'une porte du boîtier.

9. Appareillage de commutation isolé sous vide selon la revendication 8,
dans lequel dans le bloc de câble (1c), au moins un câble (3) connecté à un contact fixe (81a) du commutateur via un transformateur de courant pour une protection du système est installé de sorte que le câble peut être amené à l'extérieur par le dessus ou le dessous du boîtier (1).

10. Appareillage de commutation isolé sous vide selon la revendication 9,
dans lequel un fusible de protection (7) et un transformateur de tension (10) connectés au câble sont disposés au niveau de la partie supérieure ou de la partie inférieure du bloc de câble.
